Europäisches Patentamt

European Patent Office

Office européen des brevets

(19)

(11) **EP 1 086 976 B1**

(12) **FASCICULE DE BREVET EUROPEEN**

(45) Date de publication et mention
de la délivrance du brevet:
**27.04.2005 Bulletin 2005/17**

(51) Int Cl.⁷: **C08J 3/075**, E21B 33/138,
E21B 43/25, E21B 43/02

(21) Numéro de dépôt: **00402238.0**

(22) Date de dépôt: **07.08.2000**

(54) **Méthode de préparation de microgels de taille contrôlée**

Verfahren zur Herstellung von Mikrogelen mit kontrollierter Teilchengrösse

Process for preparing microgels of controlled size

(84) Etats contractants désignés:
**GB IT NL**

(30) Priorité: **21.09.1999 FR 9911862**

(43) Date de publication de la demande:
**28.03.2001 Bulletin 2001/13**

(73) Titulaire: **Institut Français du Pétrole**
**92852 Rueil-Malmaison Cedex (FR)**

(72) Inventeurs:
• **Chauveteau, Guy**
**92000 Nanterre (FR)**
• **Tabary, René**
**78100 Saint-Germain-En-Laye (FR)**
• **Renard, Michel**
**95640 Marines (FR)**
• **Omari, Aziz**
**33600 Pessac (FR)**

(56) Documents cités:
EP-A- 0 604 988        US-A- 4 670 165
US-A- 5 642 783        US-A- 5 789 351

## Description

Cette invention a pour objet une méthode permettant de préparer des microgels de taille contrôlée en soumettant une composition constituée principalement d'une solution de polymère et de réticulant à une contrainte imposée pendant un temps défini.

La production rapide d'eau dans les puits producteurs d'huile ou de gaz a toujours été un problème majeur pour les opérateurs pétroliers :

- des équipements pour la séparation et le traitement de l'eau sont nécessaires et engendrent des investissements coûteux, notamment dans le domaine de la production offshore;
- la production d'eau dans les puits est un facteur limitatif de la rentabilité de l'exploitation du réservoir d'hydrocarbures ;
- les contraintes réglementaires sévères pour le contrôle des rejets, notamment des eaux industrielles, imposent de tenter de régler le problème au niveau du gisement plutôt qu'en terme de traitement de surface.

Les solutions connues pour prévenir des venues d'eau dans un gisement d'hydrocarbures sont pour la plupart des méthodes d'injection non sélective fondées sur un traitement de la roche réservoir par injection d'une solution de polymère.

L'effet du traitement est directement relié au rapport de l'épaisseur de la couche de polymère adsorbée au rayon de pore moyen dans la couche traitée.

Dans le domaine des faibles à moyennes perméabilités, l'épaisseur de la couche adsorbée peut être contrôlée par un ajustement du poids moléculaire du polymère utilisé.

Le traitement de formations de plus fortes perméabilités requiert des épaisseurs de couche adsorbée plus importantes qui ne peuvent être obtenues par un polymère seul.

Le principal avantage d'une utilisation d'un polymère seul réside dans le fait que le risque de colmatage du puits est faible par comparaison avec le risque encouru par la mise en oeuvre de systèmes gélifiants. Cependant, l'intensité de l'effet demeure limité, puisque contraint par la seule expansion osmotique de la molécule de polymère dans l'eau du réservoir.

La réticulation du polymère par un agent de gélification est la méthode la plus largement utilisée aujourd'hui pour tenter d'améliorer l'efficacité de l'injection de polymère dans la réduction des venues d'eau. Les polymères réticulés sont généralement plus stables que le polymère seul dans des environnements sévères (par exemple, forte salinité, température élevée). Il n'en demeure pas moins que la méthode demeure incertaine du fait d'un mauvais contrôle du processus de réticulation qui entraîne des risques importants de réduction de la production d'huile et même de colmatage total ou partiel du puits.

En effet, des tests de gélification sont très souvent effectués en statique et les résultats obtenus, se limitant souvent à des classifications de force de gels d'après des critères visuels, sont très différents du comportement du système en dynamique, c'est à dire dans les conditions d'injection dans la formation par l'intermédiaire d'un puits.

L'objectif d'un traitement sélectif des formations réservoirs (modification des perméabilités relatives) avec un système polymère/réticulant est de diminuer la mobilité de l'eau dans la roche sans réduire la mobilité de l'huile de façon que la production d'hydrocarbures puisse continuer.

Pour fixer un ordre d'idée, dans le cas de couches dont la perméabilité se situe entre, par exemple, 2 darcys et 50 millidarcys, pour réduire la perméabilité jusqu'aux limites possibles sans risquer d'endommager la couche par des phénomènes de rétention, il faut former à la surface des pores une couche d'épaisseur comprise respectivement entre 5 $\mu$m et 1 $\mu$m.

De telles épaisseurs de couches ne peuvent être obtenues que par l'adsorption d'agrégats, ou microgels, dont on est capable de maîtriser la taille.

Ainsi, la présente invention concerne une méthode pour la préparation de micro gels de taille contrôlée, notamment mono disperse. On injecte dans un milieu poreux et perméable une composition gélifiante comprenant un polymère et un additif de réticulation du polymère et on recueille à la sortie du milieu une solution de micro gels de taille sensiblement régulière.

Le polymère et le réticulant peuvent être mis en contact à l'entrée du milieu poreux. L'introduction des composés dans le milieu peut se faire ensemble (après un pré mélange) ou séparément, le mélange se faisant alors dans ce cas dans le milieu poreux.

Le débit et le temps de transit de la composition dans le milieu poreux peuvent être déterminés pour l'obtention d'une taille donnée des micro gels en sortie du milieu, compte tenu de la porosité et de la perméabilité du milieu.

Le milieu poreux peut être constitué par une masse de matériau granulaire, tel que du sable de granulométrie comprise entre 50 et 2000 $\mu$m.

Le milieu poreux peut être constitué par du tissu filtrant, telle qu'une cartouche filtrante.

On peut stabiliser la solution de micro gels en sortie du milieu poreux en annihilant l'éventuel quantité excédentaire d'additif réticulant.

La composition gélifiante peut être constituée de polyacrylamide réticulée par un complexe de l'ion métallique zirconium.

On peut stabiliser la solution de micro gels en effectuant l'une au moins des étapes suivantes:- on dilue la solution, - on augmente le pH, - on ajoute un complexant de l'additif réticulant.

L'invention concerne également une application de la méthode ci-dessus dans laquelle on injecte la solution de micro gels dans une formation rocheuse souterraine pour en modifier la perméabilité. L'application concerne plus particulièrement la prévention des venues d'eau pour réduire la perméabilité relative à l'eau.

Le document "Controlling In-Situ Gelation of Polyacrylamides by Zirconium for Water Shutoff" - SPE International Symposium on Oilfield Chemistry - Houston, Texas, 16-19 February 1999 (SPE 50752) décrit un modèle théorique de réticulation qui a pu être élaboré pour un système polyacrylamide en présence d'un agent extérieur de réticulation: un complexe de l'ion métallique de zirconium. A l'aide de ce modèle, on peut mieux comprendre les mécanismes d'agrégation de molécules sous cisaillement. Les résultats présentés ont été validés sur d'autres systèmes gélifiants, par exemple le polyacrylamide en présence d'acétate de chrome qui est largement utilisé dans l'industrie pétrolière. A cause de restrictions environnementales, les réticulants à base de composés métalliques du groupe IV peuvent être préférés pour leur non-toxicité (Ti, Zr, Hf). Le lactate de zirconium a été de préférence utilisé. Des sels d'autres oxyacides peuvent aussi être utilisés : malate, tartrate, glycolate, citrate,... De leur nature dépendra la stabilité et donc la réactivité du complexe métalliques. De la même manière, des complexes métalalkanolamine (amine OH-métal) ou polyhydroxyle-carboxylique acide peuvent être utilisés, ainsi que d'autres types d'agents gélifiants : - composés métalliques (citrate d'aluminium, sulfate d'aluminium,... ; - composés organiques (glyoxal, phénol, formaldéhyde, polyéthylèneimine,...).

L'invention ne se limite pas aux seuls systèmes gélifiants cités dans la présente description. Les polymères peuvent être par exemple, de manière non exhaustive :- polyacrylamides neutre, hydrolysés (anioniques) ou cationiques, - scléroglucane, - xanthane, - polygalactomannanes,...

En ce qui concerne le système polyacrylamide-zirconium en exemple, le suivi de la gélification a été réalisé au travers de l'évolution des propriétés rhéologiques du mélange.

La cinétique de gélification dépend de divers paramètres, tels que ceux liés :

- aux composés chimiques du système lui-même, à savoir : le poids moléculaire, le taux d'hydrolyse, la concentration en polymère, la nature et la concentration en réticulant et en complexant éventuel du réticulant;
- aux conditions physico-chimiques environnantes : pH, température, salinité;
- à l'hydrodynamique imposé à la composition: vitesse de cisaillement.

Une solution de polymère est une collection 3D de chaînes linéaires formant des « blobs », ou pelotes expansées dans le solvant. La réticulation de ces chaînes conduit à former des agrégats de macromolécules branchées de grande masse. Le degré de branchement et la masse moléculaire augmentent avec l'avancement du processus de réticulation.

En conditions statiques, le système évolue vers un ensemble d'agrégats poly dispersés et enchevêtrés formant une phase "solution". Au cours du processus de réticulation, lorsque la taille d'un agrégat atteint la dimension de l'espace dans lequel il se trouve, une phase "gel" est alors présente et la viscosité du système diverge et tend vers l'infini.

Sous cisaillement, tous les amas dont la dimension atteint une certaine taille critique sont rompus pendant que les plus petits continuent leur croissance avant d'être rompus à leur tour lorsqu'ils atteignent la taille critique. Ce processus de formation suivie de rupture conduit à une solution d'agrégats monodisperses baignant dans la solution de polymère originelle si la concentration en réticulant est très faible, ou seulement dans le solvant si le réticulant est en excès.

En fait, ce processus est une situation d'équilibre où la déformation amène les agrégats en contact avec la probabilité de constitution d'agrégats plus grands. Excédant ainsi la taille critique, ces agrégats sont alors rompus.

Chacun de ces agrégats est contenu dans une sphère équivalente de rayon $R_a$. A l'intérieur de cette sphère, les « blobs », ou pelotes constitutives sont disposées spacialement de façon fractale et l'on peut écrire :

$$t = R_a{}^{df}$$

- t est le temps compté à partir du début de la mise en contact du polymère avec le réticulant, il est proportionnel à la masse de l'agrégat.
- df représente la dimension fractale de l'objet.

L'agrégat est soumis à la contrainte visqueuse $\eta_p * \gamma$, $\eta_p$ est la viscosité de la solution de polymère initiale. Cette contrainte génère un couple visqueux $\Gamma$ auquel l'agrégat résiste tant que le couple demeure inférieur à une certaine valeur critique $\Gamma_c$. Le critère de rupture s'écrit :

$$\Gamma = \eta_p * \gamma * R_a{}^3 \cong \Gamma_c$$

$\Gamma_c$ est directement proportionnel à la force de liaison et le critère ci-dessus montre que le rayon de l'agrégat varie avec le gradient comme $R_a \approx \gamma^{1/3}$

Par ailleurs, en écrivant la continuité des couples à l'interface entre l'agrégat et le milieu environnant, on obtient :

$$\eta_a \approx \gamma_p * (R_a/R_p)^3$$

$\eta_a$ et $\eta_p$ sont les viscosités respectives du système et de la solution de polymère initiale. Lorsque les dernières relations sont couplées, la viscosité du système varie alors comme $\gamma^{-1}$ (régime de diffusion).

Dans les conditions énoncées, le réticulant est en excès et une fraction demeure en solution en présence d'agrégats. De cette façon, cette fraction peut conduire avec une certaine probabilité à la formation de liens intramoléculaires donnant des agrégats plus denses et de rayon plus faible.

Les résultats de gélification réalisés à différentes vitesses de cisaillement montrent la validité de cette approche. Les résultats sont corroborés par des mesures de taille effectuées par diffusion quasi-élastique de la lumière ainsi que par un calcul de taille d'après une détermination pseudo instantanée du temps de relaxation de la pelote constitutive de l'agrégat.

La présente méthode selon l'invention consiste à soumettre à un cisaillement contrôlé une solution d'un élément A (polymère) et une solution d'un élément B (réticulant) injectés dans un milieu filtrant (cisaillant), inerte chimiquement, de faible capacité d'adsorption, et pouvant résister à l'usure et à la pression.

Le milieu filtrant pourra être une masse filtrante granuleuse, en l'occurrence un sable grossier (diamètre de grains de l'ordre de 100 à 500 µm), ou éventuellement un ensemble de tissus filtrants (cartouches filtrantes). Le tissu filtrant est au demeurant plus coûteux et également plus fragile, il devra, de ce fait être supporté par un treillis métallique plus résistant.

Le débit et le temps de passage dans le milieu filtrant déterminent, en fonction des conditions opératoires (masse moléculaire, viscosité, concentration, pH, ...), la taille des agrégats ou des entités en sortie de filtre.

De préférence, l'injection des éléments A et B se fait sensiblement simultanément dans le milieu filtrant.

Le temps de séjour dans les dispositifs précités sera fonction des conditions opératoires.

Les agrégats de taille définie par le cisaillement, recueillis en sortie du milieu "filtrant" sont stabilisés en s'assurant qu'il ne reste plus de réticulant en excès à la fin du processus ou en arrêtant la réaction par diverses méthodes telles que la dilution du mélange, l'augmentation de pH (dans le cas du zirconium ou du chrome), ou par ajout d'un complexant du réticulant (par exemple le lactate de sodium dans le cas du zirconium),

Les résultats des expériences faites à partir d'un polymère et d'un réticulant donnés montrent que les agrégats peuvent atteindre des dimensions allant jusqu'à 10 fois la taille de la molécule de polymère initiale.

La solution d'agrégats stabilisés est ensuite conditionnée pour une utilisation industrielle ou directement injectée dans la formation à traiter (contrôle des profils de production dans un puits). Dans ce cas, le contrôle de la perméabilité est basé, comme pour un polymère seul, sur le principe de l'adsorption des agrégats à la surface du minéral. L'épaisseur de la couche adsorbée est directement dépendante de la taille des agrégats. On peut donc ainsi régler et adapter la réduction de perméabilité grâce au contrôle de la taille des agrégats injectés.

## Revendications

1. Méthode pour la préparation de microgels de taille contrôlée, **caractérisée en ce que** l'on injecte dans un milieu poreux et perméable une composition gélifiante comprenant un polymère et un additif de réticulation dudit polymère et **en ce que** l'on recueille à la sortie dudit milieu une solution de microgels de taille sensiblement régulière.

2. Méthode selon la revendication 1, dans laquelle le polymère et le réticulant sont mis en contact à l'entrée du milieu poreux.

3. Méthode selon l'une des revendications précédentes, dans laquelle le débit et le temps de transit de ladite composition dans le milieu poreux sont déterminés pour l'obtention d'une taille donnée des microgels, compte tenu de la porosité et de la perméabilité dudit milieu.

4. Méthode selon l'une des revendications précédentes, dans laquelle ledit milieu poreux est constitué par une masse de matériau granulaire, tel que du sable de granulométrie comprise entre 50 et 2000 µm.

5. Méthode selon l'une des revendications 1 à 3, dans laquelle ledit milieu poreux est constitué par du tissu filtrant, telle qu'une cartouche filtrante.

6. Méthode selon l'une des revendications précédentes, dans laquelle on stabilise ladite solution de microgels en sortie du milieu poreux en annihilant l'éventuel quantité excédentaire d'additif réticulant.

7. Méthode selon l'une des revendications précédentes, dans laquelle ladite composition gélifiante est constituée de polyacrylamide réticulée par un complexe de l'ion métallique zirconium.

8. Méthode selon l'une des revendications 6 ou 7, dans laquelle on stabilise ladite solution de microgels en effectuant l'une au moins des étapes suivantes:- on dilue la solution, - on augmente le pH, - on ajoute un complexant de l'additif réticulant.

9. Méthode selon l'une des revendications précédentes, dans laquelle on injecte ladite solution de microgels dans une formation rocheuse souterraine pour en modifier la perméabilité.

**Patentansprüche**

1. Verfahren zur Herstellung einer Microgels kontrollierten Größe, **dadurch gekennzeichnet, dass** man in ein poröses und permeables Medium eine Gelifzierungszusammensetzung einspritzt, die ein Polymer und einen Vernetzungszusatz des Polymers umfasst, und dadurch, dass man am Ausgang des Mediums eine Microgellösung von im Wesentlichen regelmäßiger Größe sammelt.

2. Verfahren nach Anspruch 1, **dadurch gekennzeichnet, dass** das Polymer und das Vernetzungsmittel am Eingang des porösen Mediums kontaktiert werden.

3. Verfahren nach einem der vorhergehenden Ansprüche, in dem der Durchsatz und die Übergangszeit der Zusammensetzung in dem porösen Medium durch Erhalt einer vorgegebenen Größe der Microgele erhalten wird unter Berücksichtigung der Porosität und der Permeabilität des Mediums.

4. Verfahren nach einem der vorhergehenden Ansprüche, bei dem das poröse Medium aus einer masse von granulärem Material besteht wie granulärem Sand zwischen 50 und 200 μm.

5. Verfahren nach einem der Ansprüche 1 bis 3, bei dem das poröse Medium aus einem filtrierenden Gewebe besteht wie einer Filterkartusche.

6. Verfahren nach einem der vorhergehenden Ansprüche, bei dem die Mikrogellösung am Ausgang des porösen Milieus unter Vernichtung einer möglichen überschüssigen Menge von Vemetzungszusatz stabilisiert.

7. Verfahren nach einem der vorhergehenden Ansprüche; bei dem die gelifizierende Zusammensetzung aus Polyacrylamid besteht, das durch einen Zirkoniummetallionenkomplex vernetzt ist.

8. Verfahren nach einem der Ansprüche 6 oder 7, bei dem man die Mikrogellösung stabilisiert, indem man eine der folgenden Stufen durchführt: man verdünnt die Lösung, man vergrößert den pH, man gibt ein Komplexierungsmittel des Vernetzungszusatzes zu.

9. Verfahren nach einem der vorhergehenden Ansprüche, bei dem man die Mikrogellösung in eine unterirdische Felsformation einspritzt, um deren Permeabilität zu modifizieren.

**Claims**

1. Method for the preparation of microgels of controlled size, *characterised by* the fact that into a porous and permeable medium is injected a gelling composition comprising a polymer and an additive for cross-linking the said polymer and *by the fact that* a solution of microgels of substantially uniform size is collected at the output of the said medium.

2. Method as described in claim 1, in which the polymer and the cross-linking agent are placed in contact at the input of the porous medium.

3. Method as described in one of the preceding claims, in which the flow-rate and the transit time of the said composition in the porous medium are determined to obtain a given microgel size, taking into account the porosity and the permeability of the said medium.

4. Method as described in one of the preceding claims, in which the said porous medium is formed of a mass of granular material, such as sand having a granular dimension of between 50 and 2000 μm.

5. Method as described in one of claims 1 to 3, in which the said porous medium consists of filtering fabric, such as a filter cartridge.

6. Method as described in one of the preceding claims, in which the said solution of microgels is stabilised at the output of the porous medium by eliminating the possible excess cross-linking additive.

7. Method as described in one of the preceding claims, in which the said gelling composition is formed of polyacrylamide cross-linked by a zirconium metal ion complex.

8. Method as described in one of claims 6 or 7, in which the said solution of microgels is stabilised by performing at least one of the following steps: the solution is diluted, - the pH is increased, - a complexing agent of the said cross-linking additive is added.

9. Method as described in one of the preceding claims, in which the said solution of microgels is injected into an underground rock formation to modify its permeability.